Europäisches Patentamt

(19) European Patent Office

Office européen des brevets

(11) Publication number: **0 008 033**
**B1**

# EUROPEAN PATENT SPECIFICATION

(12)

(45) Date of publication of patent specification: **11.05.83**

(21) Application number: **79102603.2**

(22) Date of filing: **23.07.79**

(51) Int. Cl.³: **G 06 F 13/00,
G 11 B 15/02, G 11 C 9/00,
H 04 K 1/00, H 04 L 9/00**

(54) Microprocessor for executing enciphered programs.

(30) Priority: **24.07.78 US 927580**

(43) Date of publication of application:
**20.02.80 Bulletin 80/4**

(45) Publication of the grant of the patent:
**11.05.83 Bulletin 83/19**

(84) Designated Contracting States:
**AT BE CH DE FR GB IT LU NL SE**

(56) References cited:
**DE - A - 1 250 163
DE - A - 2 717 654
DE - A - 2 822 522
GB - A - 1 393 920
GB - A - 1 539 356
US - A - 3 609 697
US - A - 3 798 359
US - A - 3 958 081
US - A - 3 958 081
US - A - 3 990 060
US - A - 4 120 030**

(73) Proprietor: **Best, Robert MacAndrew
16016 - 9th Avenue N.E.
Seattle, Washington 98155 (US)**

(72) Inventor: **Best, Robert MacAndrew
16016 - 9th Avenue N.E.
Seattle, Washington 98155 (US)**

(74) Representative: **Patentanwälte Dipl.-Ing. A.
Grünecker, Dr.-Ing. H. Kinkeldey, Dr.-Ing. W.
Stockmair,
Dr. rer. nat. K. Schumann, Dipl.-Ing. P.H. Jakob,
Dr. rer. nat. G. Bezold Maximilianstrasse 43
D-8000 München 22 (DE)**

(56) References cited:
**ELEKTRONIKER, vol. 16, no. 3, 1977 Aarau, F.
FURRER "Codierung zur Geheimhaltung einer
Nachrichtenübertragung", pages EL1—
EL7+Pages EL6+EL7, paragraph 3.3+
IBM Technical Disclosure Bulletin, Vol. 12, No.
2, July 1969, page 257
A. P. Speiser, "Digitale Rechenanlagern",
1967, pp. 258—265**

Courier Press, Leamington Spa, England.

Microprocessor for executing enciphered programs

This invention relates to microprocessors according to the preamble of claims 1 and 6 respectively.

Development of proprietary computer programs and data-bases for microcomputers is often expensive. It is important to the developers that their programs be protected from execution by unauthorised microcomputer owners who may be numerous and anonymous.

Microprocessors are known in accordance with the preamble of claim 1 which address, fetch and execute a sequence of instructions. Such instructions, known since the days of von Neumann, are stored like data in addressable storage and typically include an executable part called an operation code and optionally an address part for specifying a storage location of a data operand or a jump instruction. It is also known to encipher data by exclusive-ORing a long key of random bits to the data in a data storage device and to decipher the enciphered data by exclusive-ORing with the same long key (IBM Technical Disclosure Bulletin, Vol. 12, No. 2, July 1969, page 257). It is known to encode an addressed data portion using, for example, the Hamming code for parity checking and error correction to obtain a result as a function of the data portion and its address (DE—A2—1 250 163). It is known to protect a computer program from unauthorised use by comparing identifying data in a program to a digital code or key in the processor (US—A—3 609 697). It is known to encipher a block of data using alternating stages of substitution and transposition as a function of a digital key (US—A—3 958 081).

It is also known to transpose portions of information in a store for cryptographic purposes (US—A—3 990 060). The data stored in a coincident block access bubble domain memory with bit-organized chips is encrypted by skewing or permuting selected word bits by predetermined amounts. This is implemented by providing an additional current loop on some or all of the chips which overlies the major loop pattern and has nodes at the similar vector poles of the major loop. The proper energization of selected ones of these additional current loops, under the control of a security key, inhibits or suppresses the advance of the bubble domains in the corresponding major loops for predetermined number of cycles of the in-plane propagating field, thus skewing the word bits in these chips with respect to the remaining word bits in the unsuppressed chips. Decryption is accomplished by further inhibiting the same major loops for the necessary number of cycles to restore word bit synchronization throughout the memory.

Encryption has been used for protecting programs as described by Richard L. Enison in a Computation Planning Inc. technical note dated 7—28—77. In this system, programs are stored in a conventional host computer in encrypted form. Attached to the host computer is a "Hard Node" computer which deciphers a selected program and outputs the program in deciphered form into the host computer's main storage. The hose CPU then executes the deciphered program from its own main storage. Such a system protects the deciphered program from access by other programs, but does not protect the deciphered program from people who have access to main storage.

It is the object of the present invention to considerably increase security in performing data processing by a microprocessor under control of an enciphered program. The microprocessor according to the invention is provided with the features according to claim 1 or 6 respectively.

The present invention avoids any need for storing a deciphered program in an information store which, in general, is accessible by other units or even other computers for fetching data or non-enciphered programs. Such access is independent of the physical location of the information storage, i.e. whether it is arranged on the chip or chips where the microprocessor is located or outside of this chip. Enciphered instructions are deciphered piecemeal as each instruction is needed for execution. The executable (operation code) part of each deciphered instruction is executed in the same chip of the microprocessor that does the deciphering and hence is not output. The advantage of such a structure over conventional systems is that the deciphered program cannot be copied for unauthorised use if the operation codes are not output onto the bus in a microcomputer.

If a block encryption method is used, the entire instruction is deciphered including address parts which may be immediately output by the microprocessor to address data or the next instruction; any unauthorised alteration to an instruction will result in a block of meaningless bits which will make meaningless the address parts of instructions. This is likely to cause a jump to a meaningless address which causes the program to malfunction. The advantage of such a structure over prior art protection apparatus (such as described in US—A—3 609 697) is that each instruction is individually protected and therefore discovery of one instruction does not aid discovery of the remaining instructions.

Alternatively, when the instructions of a program are stored in the information store as a plurality of addressable bytes in a transposed arrangement, the microprocessor according to the invention obtains the real address of the next instruction only by cryptographically transforming the digital address formed in dependence on the execution of the instruction presently executed for instance by incrementing the digital address of the latter instruction.

Various deciphering methods are herein described for use in the cryptographic microprocessor apparatus, including methods which result in the cipher of an instruction being a complicated function of the instruction's address in memory. Such enciphering makes the work required to break the cipher more expensive for an unauthorized user than redeveloping the program independently, and thereby deters program piracy.

This invention makes it possible to distribute and execute copies of a proprietary program, while simultaneously keeping the program secret.

Brief description of the drawings

Figure 1 is a block diagram of a crypto-microprocessor which uses a cipher key to control deciphering.

Figure 2 is a schematic diagram of a scrambled address embodiment of deciphering circuit 4 of Figure 1.

Figure 3 is a generalized schematic diagram of a 3-stage address scrambler using alternating substitution and transposition.

Figure 4 is a generalized schematic diagram of a 5-stage address scrambler using alternating substitution and transposition.

Figure 5 is a block diagram of a crypto-microprocessor with on-chip read-only memory using byte transposition.

Figure 6 is a schematic diagram of one embodiment of deciphering circuit 4 of Figure 1 using bit transposition.

Figure 7 is a schematic diagram of one embodiment of deciphering circuit 4 of Figure 1 using byte substitution.

Figure 8 is a block diagram of one embodiment of deciphering circuit 4 of Figure 1 using a block cipher with address-modified keys.

Detailed description of the invention

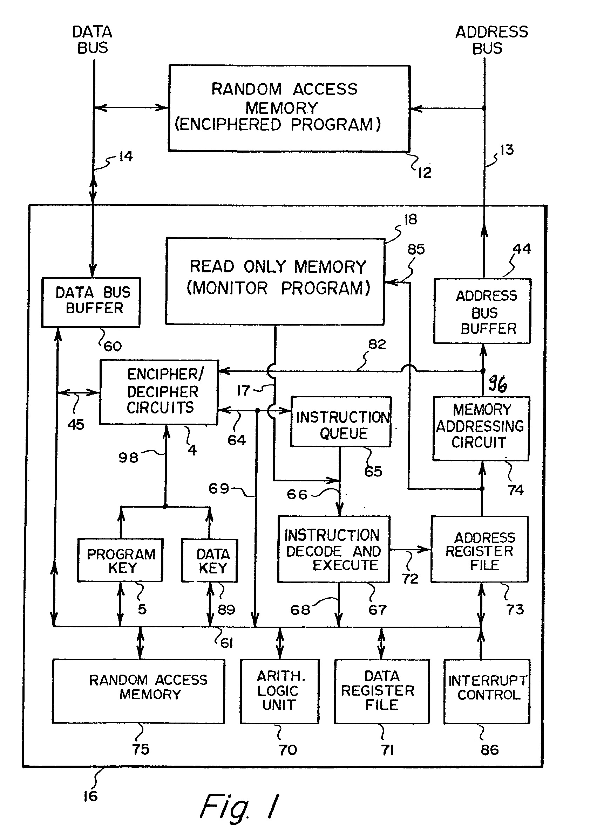

Referring to Figure 1, typical crypto-microprocessor 16 executes an enciphered program stored in random-access memory 12 by addressing program instructions in memory 12 via address bus 13, deciphering the instructions in deciphering circuit 4, and decoding and executing in circuit 67 each deciphered instruction obtained from circuit 4 via bus 64. Microprocessor 16 is constructed as an integrated circuit.

The portion of information addressed in memory 12 and input to microprocessor 16 via data bus 14 may be a byte or block containing an instruction or part of an instruction or several instructions. Information addressed in memory 12 may also include enciphered data. Deciphering of instructions is done piecemeal as the program executes, so that the program as a whole is not present in deciphered form in the computer in which microprocessor 16 is a component.

A typical crypto-microprocessor 16 includes conventional instruction decode and execut circuit 67, arithmetic-logic unit 70, data registers 71, address registers 73, internal bus 61, and instruction register or queue 65. Queue 65 may store additional instructions which are deciphered in advance of their being needed for execution. Portions of the deciphered instructions fetched from queue 65 include operation codes which are decoded by circuit 67, immediate data which is passed via buses 68 and 61 to memory 75 or bus 14, and address portions which are passed via bus 72 to conventional address register file 73. This file may include base, segment, page, word and/or byte addresses from which conventional addressing unit 74 computes an instruction address for outputting on bus 13. External address bus 13, data bus 14 and internal bus 61 may consist of 8-bits, 16-bits, 20-bits or other bus sizes.

Microprocessor 16 operates in a conventional cyclical sequence: incrementing a program counter in address register 73, outputting an address on bus 13 during an instruction address cycle, inputting an instruction byte on bus 14 from random-access memory 12 in a fetch cycle, decoding and executing the fetched instruction in circuit 67, reading a data address from memory 12 into address register 73, addressing a byte of data in a data address cycle, and reading data from memory 12 into internal memory 75 or register 71. Other conventional instruction and microinstruction sequences may be used.

Memory 12 may be any of a variety of conventional storage devices, such as solid-state read-only memory or read-write memory into which the enciphered program has been copied from storage media such as magnetic disc or tape, optically-coded discs (videodiscs), or magnetic bubble domain memory.

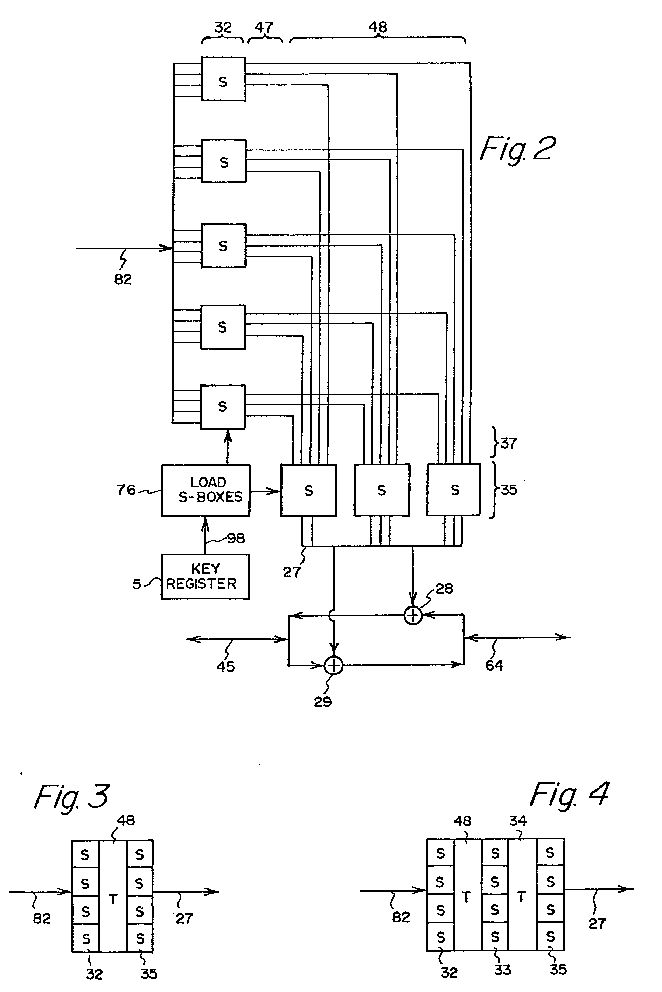

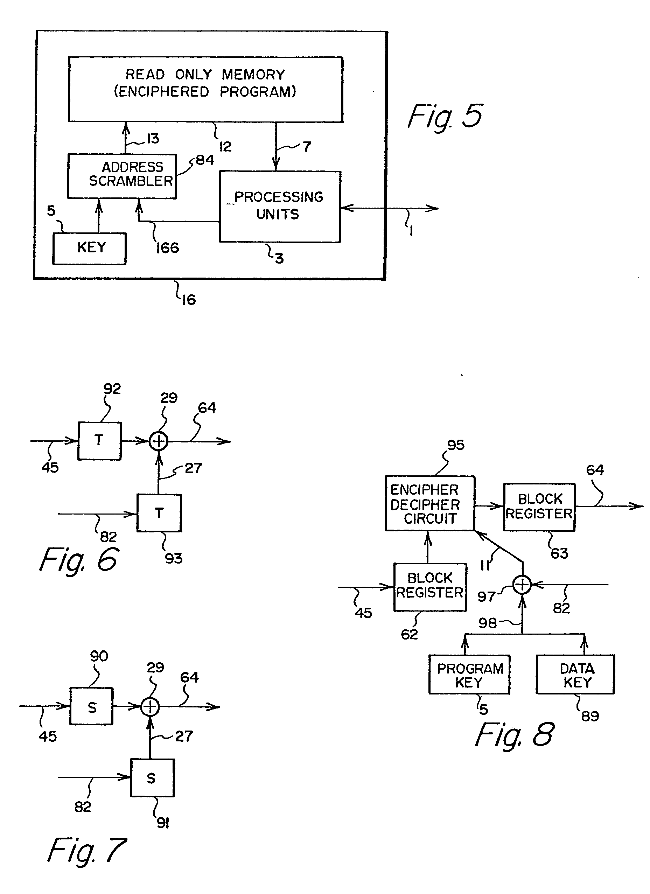

Deciphering circuit 4 is detailed for various embodiments in Figures 2, 3, 4, 6, 7, and 8, and is comprised of various elements depending on the cipher method used. Enciphering and deciphering methods may be used in various combinations in microprocessor 16 and may be controlled by a cipher key stored in key registers 5 or 89 (Figures 1 and 8), or by one or more substitution tables 32, 35, 90 and 91 (Figures 2 and 7), or by one or more transposition matrices 92 and 93 (Figure 6) or by an arrangement of crossed wires 48 (Figure 2). Deciphering methods may include substitution (monoalphabetic, polyalphabetic, and/or block), transposition (bit or byte), exclusive-OR addition (modulo-two), or other methods. The deciphering process is a function of program addresses (as in Figure 2). Deciphering may be used during instruction fetch (as in Figure 1) and may be used with byte transposition (as in Figure 5). Block ciphers (Figures 3 and 4) using alternating substitution and transposition may be used for address scrambling (as in Figure 2) or for deciphering blocks of program in circuit 95 (Figure 8).

Unlike conventional deciphering devices used in secure data communication systems which output deciphered information to authorized persons, deciphering circuit 4 produces deciphered instructions which are intended for use only by instruction decode/execute circuit 67 within microprocessor 16. Although small portions of the deciphered information such as error messages and control characters may be output by microprocessor 16, executable instructions should not be output. Internal buses such as bus 64 which convey deciphered instructions should be isolated from external access by buffer 60 during such conveying.

Plain unenciphered data may be read and written in a conventional manner via buses 14 and 61 and buffer 60. Alternatively, data processed by microprocessor 16 may be enciphered and deciphered by circuit 4 under control of the key in register 5 or 89.

Register 5 may consist of volatile memory which is maintained by an electric battery, or non-volatile electrically-alterable storage which is not accessible on external buses and not readily susceptible to probing nor optically readable from microprocessor chip 16.

Scrambled address embodiments

Each enciphered byte on bus 45 may be deciphered as it is read into microprocessor 16 by combining the byte being deciphered with its address, so that an instruction is deciphered differently depending on where in memory it is located. Three embodiments of circuit 4 are detailed in Figures 2, 6, and 7 in which the enciphered byte on bus 45 is exclusive-ORed in gates 29 with a scrambled function on bus 27 of the byte's address on bus 82. The address scrambling process may be simple substitution 91 (Figure 7) or bit transposition 93 (Figure 6), or a combination of alternating stages of substitution and transposition (Figure 2). A byte which is combined in gates 29 with the byte's scrambled address, may be further deciphered by substitution table 90 (Figure 7) or transposition matrix 92 (Figure 6) which contain quasi-random permutations of integers or bit positions.

The embodiment of deciphering circuit 4 shown in Figure 2 scrambles the 20-bit address on bus 82 down to an 8-bit scrambled address on bus 27 for deciphering and enciphering 8-bit bytes on buses 45 and 64. The substitution tables 32 and 35 each contain one or more sets of integers which may be permuted in any quasi-random order. This quasi-random arrangement of integers is kept secret and may be different for each microprocessor unit. These permuted integers may be stored into substitution tables 32 and 35 when the programs to be protected are enciphered, or may be generated when needed from a cipher key in register 5.

Microprocessor 16 may execute a program stored in memory 18 which generates integers for storing into tables 32 and 35. This table loading process is symbolized by box 76 (Figure 2).

Summarizing the sequence of events during the fetching of a typical instruction, and referring to Figures 1 and 2, an instruction address is computed by conventional addressing circuit 74 from address values in register file 73. The computed instruction address on bus 96 is output on bus 13 and is also conveyed internally via bus 82 to deciphering circuit 4 (Figure 1) which generates a scrambled address on bus 27 (Figure 2) from the address on bus 82. An enciphered instruction byte is read onto data bus 14 from the location in memory 12 specified by address bus 13. The enciphered instruction byte is read by microprocessor 16 in a fetch cycle from bus 14 onto bus 45. The scrambled address on bus 27 (Figure 2) is exclusive-ORed in gates 29 with the enciphered instruction byte on bus 45 to produce a deciphered instruction byte on bus 64 which is stored into instruction queue 65. Circuit 67 decodes and executes each instruction obtained from queue 65 or memory 18.

If the instruction being executed stores a byte into external storage in cipher form, the data address on buses 96, 82, and 13 is scrambled to produce a scrambled address on bus 27 (Figure 2). This scrambled address is exclusive-ORed in gates 28 with the plain data byte on buses 61 and 64, to produce a cipher bute on bus 45. This enciphered data byte is output via buffer 60 to external data bus 14 which conveys the cipher byte to external memory 12.

Later when this data byte is read from memory 12 the cipher byte on buses 14 and 45 is exclusive-ORed with the same scrambled address on bus 27 yielding the original plain data byte on buses 64, 69 and 61.

The address-scrambling method illustrated in Figure 2 may be used for scrambling addresses other than 20-bit addresses and words other than 8-bit bytes. For example addresses of 16 bits may be scrambled by using four 4-bit substitution tables 32 and four 4-bit substitution tables 35. Such an address scrambler is shown schematically in Figure 3. The security of the address scramble in Figure 3 may be increased by increasing the number of stages. If tables 32 and 35 each have 4-bits in and 4-bits out, then an additional substitution stage 33 and transposition stage 34 may be included as shown in Figure 4.

Each substitution table 32 in Figure 2 provides a table-lookup of a 3-bit integer in a table of 16 permuted integers. In this example each substitution table 32 contains two sets of the eight 3-bit integers "000" through "111", i.e. 16 integers are stored in each substitution table 32. The two sets of integers may be intermingled when they are loaded into substitution tables 32. Similarly, substitution tables 35 in this example each contain four sets of the eight 3-bit integers "000" through "111", i.e. 32 integers. Each integer value is stored four times at random locations in each table of 32 integers. Each of the bits from a substitution table in one stage are transposed to a different substitution table in the next stage to insure that a change in any one bit on bus 82 affects all bits on bus 45. Substitution tables 32 cause each address bit to affect 3 bits on lines 47. The transposition matrix 48 spreads these 3 bits to the 3 substitution tables 35. Thus each bit of address on bus 82 affects all 3 substitution tables 35 which affect all 8 bits in bus 27 and bus 45. Transposition stage 48 may be accomplished by simple crossed wires or a matrix of semiconductor devices.

Block cipher embodiments

A program may be enciphered in multi-byte blocks using block cipher methods. Details of deciphering circuit 4 for blocks are shown in Figure 8. Each block may consist of 64 bits, 32 bits or other convenient sizes and may contain several instructions which are deciphered as a block. The cipher key may be altered for each block address, so that each block is enciphered with a different key. The block address may be exclusive-ORed in gates 97 with the basic key in register 5 to produce an altered key on bus 11 for deciphering circuit 95.

Referring to Figures 1 and 8, each block of instructions in memory 12 is addressed by conventional addressing circuit 74 via address bus 13. The addressed block is read from memory 12 onto data bus 14 and thence via bus 45 to block register 62 (Figure 8). Deciphering unit 95 then deciphers the enciphered block in register 62 under the control of the altered key on bus 11. The deciphered block of instructions, which deciphering unit 95 stores into register 63, passes to instruction queue 65 via bus 64.

Each successive block of enciphered information is likewise deciphered by circuit 95 using the cipher key modified by the block address. The key should be at least 56 bits to prevent testing of all possible keys by a pirate who has obtained portions of the deciphered program.

Block deciphering circuit 95 may be constructed as described in U.S. Patent 3,958,081 or as described above using alternating stage of substitution and transposition which are schematically represented in Figures 3 and 4.

In such block cipher systems each bit of the enciphered block affects all bits of the deciphered block. Hence a pirate is prevented from tricking the microprocessor into executing slightly altered instructions, because changing any one bit of an enciphered block produces a deciphered block of gibberish.

Data may also be stored in enciphered form in memory 12 and be read via data bus 14 into block register 62 for deciphering by circuit 95.

The deciphered data in data register 63 passes via buses 69 and 61 to internal memory 75. Data which is output in cipher to external memory 12 passes from internal memory 75 via buses 61 and 45 to register 65 for enciphering. Circuit 95 is switched to an enciphering mode to produce an enciphered block in register 63. This block is output via buses 69, 61 and 14 to external memory 12 or to another storage device addressed by bus 13.

Embodiments with on-chip memory

If the enciphered program is small enough it may be stored in read-only memory in cipher form or transposed form on the crypto-microprocessor chip (Figure 5) to prevent a pirate from reading the program from a photographic enlargement of the chip or by probing an easily found internal bus. A small cipher key can be hidden among the tens of thousands of devices on the chip, but a large memory cannot be so hidden.

Referring to Figures 1 and 5, a simple embodiment is shown for microprocessor 16 which stores the bytes of the program in a transposed or scrambled arrangement in memory 12. Since each byte in the program has an address, if this address is scrambled by scrambler 84 using substitution, bit-transposition or other means, the effect is to scatter the bytes of the program in memory 12. A person studying bytes that were read from memory 12 would not known in what sequence they are executed, nor which bytes are operation codes, addresses, or data. Circuit 3 represents instruction decoding and executing circuit 67 and other circuitry shown in Figure 1. When an address is read from memory 12 on bus 7 as part of an instruction, the address may be unenciphered and may be stored in an address register in file 73 where it may be incremented for sequential instruction fetch. This incremented address is passed via bus 166 to address scrambler 84. The scrambled address on bus 13 addresses the desired byte in memory 12.

A pirate should not be able to access the circuitry of microprocessor 16 without causing erasure of the cipher key or otherwise making microprocessor 16 disfunctional. Potting in thermoset plastic is an adequate deterrent to all but the most skilled pirate. To prevent removal of the plastic using stripping solvents, a highly cross-linked resin may be used. Heavy, preferably opaque, glassification of the chip, such as that described in U.S. Patent 4,133,690, may also be used.

The word "byte" has been used herein in a broad sense to mean a portion of information or word of 8 bits or other small word sizes such as 7 bits or 16 bits.

The present disclosure is made only by way of example. Equivalent embodiments which do not depart from the scope of my invention as defined in the appended claims may occur to those skilled in the art in the light of this disclosure.

**Claims**

1. Microprocessor (16) for executing a computer program of instructions stored in an information store (12) in enciphered form as portions of enciphered information, the microprocessor (16) having addressing means (74) for specifying locations in the store (12), means (66) for fetching a sequence of instructions having executable parts and address parts, and means (67) for decoding and executing a sequence of fetched instructions, the microprocessor (16) being characterized by:

a) means (5) for storing an encryption key corresponding to said stored enciphered program (in 12);
b) deciphering means (4, 29) for cryptographically transforming a portion (on bus 45) of said enciphered information as a function of said key (5) and of the associated address (82) to produce a deciphered instruction (65) or a portion of it before its execution (in 67).

2. Microprocessor according to claim 1, characterized in that said addressing means (74) specifies the address (on 13) of a location in the store (12) of a successor enciphered instruction as a function of an address part (72) of said deciphered instruction (in 65), the successor enciphered instruction being transformed to deciphered form by said deciphering means (4).

3. Microprocessor according to claim 1, characterized in that said deciphering means (4) applies alternating stages of substitution (32, 33) and transposition (48, 34) to a block (62) of said enciphered information (on bus 45) to produce a deciphered block (on 64) containing two or more deciphered instructions.

4. Microprocessor according to claim 1, characterized by means (97) for combining said key (5) with said associated address (82) so as to produce an altered key (11) which controls said deciphering means (95, 4).

5. Microprocessor according to claim 1, characterized by address scrambling means (32, 48, 35, 91, 93) for enciphering said associated address (82) as a function of said key (5) to produce a scrambled address (27) which controls said deciphering means (29, 4).

6. Microprocessor (16) for executing a computer program of instructions stored in an information store (12) as a plurality of addressable bytes in a transposed arrangement, the microprocessor (16) having processing means (3) for fetching a byte (on 7) of an instruction from said store (12), and for decoding and executing (in 67) the fetched instruction, and for specifying the digital address (on bus 166) of a successor byte in said program, the microprocessor (16) being characterized by: means (84) for obtaining the real address of the next byte to be accessed in said store (12) by cryptographically transforming said digital address (on 166) to produce a scrambled address (13) in accordance with said transposed arrangement of bytes.

**Revendications**

1. Microprocesseur (16) pour effectuer un programme d'instructions d'ordinateur mémorisé dans une mémoire (12) d'informations sous une forme chiffrée en parties d'une information chiffrée, le microprocesseur (16) ayant des moyens d'adressage (74) pour spécifier des positions dans la mémoire (12), des moyens (66) pour extraire une suite d'instructions ayant des parties d'exécution et des parties d'adresse, et des moyens (67) pour décoder et exécuter une suite d'instructions extraites, le microprocesseur (16) étant caractérisé par:

a) des moyens (5) pour mémoriser une clé de chiffrage correspondant audit programme chiffré mémorisé (dans 12);
b) des moyens (4, 29) de déchiffrage destinés à transformer de façon crytographique une partie (sur un bus 45) de ladite information chiffrée en fonction de ladite clé (5) et de l'adresse associée (82) pour produire une instruction déchiffrée (65) ou une partie de cette instruction avant son exécution (dans (67).

2. Microprocesseur selon la revendication 1, caractérisé en ce que lesdits moyens d'adressage (74) spécifient l'adresse (sur 13) d'une position dans la mémoire (12) d'une instruction chiffrée suivante en fonction d'une partie d'adresse (72) de ladite instruction déchiffrée (dans 65), l'instruction chiffrée suivante étant transformée en une forme déchiffrée par lesdits moyens (4) de déchiffrage.

3. Microprocesseur selon la revendication 1, caractérisé en ce que lesdits moyens (4) de déchiffrage appliquent des phases alternées de substitution (32, 33) et de transposition (48, 34) à un bloc (62) de ladite information chiffrée (sur le bus 45) pour produire un bloc déchiffré (sur 64) contenant deux instructions déchiffrées ou plus.

4. Microprocesseur selon la revendication 1, caractérisé par des moyens (97) pour combiner ladite clé (5) avec ladite adresse associée (82) afin de produire une clé modifiée (11) qui commande lesdits moyens de déchiffrage (95, 4).

5. Microprocesseur selon la revendication 1, caractérisé par des moyens d'embrouillage d'adresse (32, 48, 35, 91, 93) pour chiffrer ladite adresse associée (82) en fonction de ladite clé (5) afin de produire une addresse embrouillée (27) qui commande lesdits moyens de déchiffrage (29, 4).

6. Microprocesseur (16) pour effectuer un programme d'instructions d'ordinateur mémorisé dans une mémoire d'informations (12) sous la forme de plusieurs multiplets adressables dans un agencement transposé, le microprocesseur (16) ayant des moyens de traitement (3) destinés à extraire un multiplet (sur 7) d'une instruction de ladite mémoire (12), et à décoder et exécuter (dans 67) l'instruction extraite, et à spécifier l'adresse numérique (sur un bus 166) d'un multiplet suivant dans ledit programme, le microprocesseur (16) étant caractérisé par: des moyens (84) pour obtenir l'adresse réelle du multiplet suivant auquel il faut accéder dans ladite mémoire (12) par transformation crytographique de ladite adresse numérique (sur 166) pour produire une adresse embrouillée (13) en conformité avec ledit agencement transposé de multiplets.

**Patentansprüche**

1. Mikroprozessor (16) zur Ausführung eines Rechnerprogramms von in einem Informationsspeicher (12) in chiffrierter Form als Abschnitte einer chiffrierten Information gespeicherten Instruktionen, wobei der Mikroprozessor (16) eine Adressiereinheit (74) zum Aufrufen von Stellen in dem Speicher (12), ein Einrichtung (66) zum Abrufen einer Folge von Instruktionen mit ausführbaren Teilen und Adressenteilen und eine Einrichtung (67) zum Dekodieren und Ausführen einer Folge abgerufener Instruktionen aufweist, und der Mikroprozessor (16) gekennzeichnet ist durch:

a) eine Einrichtung (5) zum Speichern eines Chiffrierschlüssels entsprechend dem genannten gespeicherten chiffrierten Programm (in 12);
b) Dechiffriereinrichtung (4, 29) zum kryptographischem Transformieren eines Abschnitts (auf Sammelleitung 45) der genannten chiffrierten Information als eine Funktion des genannten Schlüssels (5) und der zugeordneten Adresse (82), um eine dechiffrierte Instruktion (65) oder einen Abschnitt derselben vor ihrer Ausführung (in 67) zu erzeugen.

2. Mikroprozessor nach Anspruch 1, dadurch gekennzeichnet, daß die Adressiereinrichtung (74) die Adresse (auf 13) einer Position in dem Speicher (12) einer nachfolgenden chiffrierten Instruktion als Funktion eines Adressenteils (72) der genannten dechiffrierten Instruktion (in 65) angibt, wobei die nachfolgende chiffrierte Instruktion durch die Dechiffriereinrichtung (4) in eine dechiffriert Form transformiert wird.

3. Mikroprozessor nach Anspruch 1, dadurch gekennzeichnet, daß die genannte Dechiffriereinrichtung (4) abwechselnde Stufen einer Substitution (32, 33) und Transposition (48, 34) auf einem Block (62) der genannten chiffrierten Information (auf Sammelleitung 45) anwendet, um einen dechiffrierten Block (auf 64) zu erzeugen, der zwei oder mehrere dechiffrierte Instruktionen enthält.

4. Mikroprozessor nach Anspruch 1, gekennzeichnet, durch eine Einrichtung (97) zum Kombinieren des genannten Schlüssels (5) mit der genannten zugeordneten Adresse (82), um so einen geänderten Schlüssel (11) zu erzeugen, der die Dechiffriereinrichtungen (95, 4) steuert.

5. Mikroprozessor nach Anspruch 1, gekennzeichnet, durch Adressenverschlüsselungseinrichtungen (32, 48, 35, 91, 93) zum Chiffrieren der zugeordneten Adresse (82) als eine Funktion des genannten Schlüssels (5), um eine verschlüsselte Adresse (27) zu erzeugen, die die Dechiffriereinrichtungen (29, 4) steuert.

6. Mikroprozessor (16) zum Ausführen eines Rechnerprogramms von in einem Informationsspeicher (12) als eine Vielzahl von adressierbaren Bytes in einer transponierten Anordnung gespeicherten Instruktionen, wobei der Mikroprozessor (16) eine Verarbeitungseinrichtung (3) zum Abrufen eines Bytes (auf 7) einer Instruktion von dem genannten Speicher (12) und zum Dekodieren und Ausführen (in 67) der abgerufenen Instruktion und zum Angeben der digitalen Adresse (auf Sammelleitung 166) eines Nachfolgebytes in dem genannten Programm aufweist und der Mikroprozessor (16) gekennzeichnet ist durch: eine Einrichtung (84) zum Erhalten der echten Adressen des nächsten in dem genannten Speicher (12) aufzurufenden Bytes durch kryptographisches Transformieren der genannten digitalen Adresse (auf 166), um eine verschlüsselte Adresse (13) gemäß der genannten transpornierten Anordnung von Bytes zu erzeugen.

Fig. 1

Fig. 2

Fig. 3

Fig. 4

2

**READ ONLY MEMORY
(ENCIPHERED PROGRAM)**

13

12

84

**ADDRESS
SCRAMBLER**

7

**PROCESSING
UNITS**

5

**KEY**

166

3

1

16

*Fig. 5*

92

29

64

T

45

T

27

82

93

*Fig. 6*

90

29

64

S

45

S

27

82

91

*Fig. 7*

95

**ENCIPHER
DECIPHER
CIRCUIT**

64

**BLOCK
REGISTER**

63

11

97

**BLOCK
REGISTER**

45

82

62

98

**PROGRAM
KEY**

**DATA
KEY**

5

89

*Fig. 8*